# EUROPEAN PATENT APPLICATION

(11) **EP 4 535 187 A1**
(43) Date of publication of application: **09.04.2025**
(21) Application number: 23825846.1
(22) Date of filing: 14.03.2023
(51) Int. Cl.: G06F 16/25

(54) **DATA SHARING METHOD AND RELATED SYSTEM**

(30) Priority: 21.06.2022 CN 202210705929
(71) Applicant: Huawei Cloud Computing Technologies Co., Ltd., Guiyang, Guizhou 550025 (CN)
(72) Inventor: MA, Wenlong, Guiyang, Guizhou 550025 (CN); ZHANG, Wenliang, Guiyang, Guizhou 550025 (CN); LI, Liang, Guiyang, Guizhou 550025 (CN)
(74) Representative: Pfenning, Meinig & Partner mbB
(86) International application number: PCT/CN2023/081373
(87) International publication number: WO 2023/246188

(57) **Abstract**

This application provides a data sharing method, including: A first data management system receives a first query statement; obtains, based on the first query statement, a second query statement by using a software development kit of a second data management system; and then accesses a unified open access service of the second data management system based on the second query statement, to obtain proprietary-format data in the second data management system. In the method, a data management system may provide a software development kit SDK to the outside, so that another data management system such as a big data engine can access a unified open access service by invoking the SDK, so as to support sharing of proprietary-format data with the outside, breaking a limitation that proprietary-format data is shared only within a system, and improving usability.

## Description

This application claims priority to Chinese Patent Application No. 202210705929.9, filed with the China National Intellectual Property Administration on June 21, 2022 and entitled "DATA SHARING METHOD AND RELATED SYSTEMS", which is incorporated herein by reference in its entirety.

### TECHNICAL FIELD

This application relates to the field of computer technologies, and in particular, to a data sharing method, a first data management system, a second data management system, a computer cluster, a computer-readable storage medium, and a computer program product.

### BACKGROUND

As information technologies continuously develop, a large amount of data is generated on the internet, for example, service data of a variety of applications, including but not limited to order data of e-commerce applications and interaction data of social applications. To facilitate quick data lookup or analysis, data warehouses (data warehouse) may be used for data management.

A data warehouse is a central repository of integrated data from one or more different data sources, and is configured to provide data query and analysis functions. With development of cloud computing, cloud native data warehouses, for example, Snowflake, gradually emerge. Snowflake is a multi-tenant, transactional, highly secure, highly scalable, and elastic system. The elastic system can be offered to users as a "pay-as-you-go" service on a cloud platform.

Specifically, a data provider (for example, a user A) may upload data to a cloud platform, with the data stored in a form of a data table. A data warehouse such as Snowflake on the cloud platform may support data consumers (for example, a user B, a user C, and a user D) to perform management and queries by using familiar tools and interfaces. Snowflake or the like may clone the data table, which is specifically copying metadata of the data table, with no need to create a copy of the data table. In this way, data is shared between the data provider and the data consumers.

However, it is difficult for the foregoing method to implement data sharing across data warehouses. In particular, it is difficult for the foregoing method to support high-performance access to proprietary-format data by an external engine, resulting in low usability.

### SUMMARY

This application provides a data sharing method, in which a data management system may provide a software development kit to the outside, so that another data management system such as a big data engine can access a unified open access service by invoking the software development kit (software development kit, SDK), so as to support sharing of proprietary-format data with the outside, breaking a limitation that proprietary-format data is shared only within a system, and improving usability. This application further provides a first data management system, a second data management system, a computer cluster, a computer-readable storage medium, and a computer program product that correspond to the method.

According to a first aspect, this application provides a data sharing method. The method is used for sharing data between different data management systems, especially proprietary-format data. For ease of description, the different data management systems are respectively denoted as a first data management system and a second data management system in this embodiment of this application. The first data management system and the second data management system may be different types of data management systems among a data warehouse, a database, or a lakehouse, or a big data engine or an artificial intelligence development platform. The first data management system is essentially a client. In a big data scenario, the client may be a software system with query functionality, for example, a software system that integrates with a big data engine such as Spark, Flink, or Presto. The second data management system is a system connected to the client, and supports queries and analysis performed by the client. Based on this, the second data management system may be a data warehouse or a database (for example, a relational database).

Specifically, the first data management system receives a first query statement, where the first query statement is a query statement that is based on a first query language; then the first data management system obtains, based on the first query statement, a second query statement by using a software development kit SDK of the second data management system, where the second query statement is a query statement that is based on a second query language; and then the first data management system accesses a unified open access service of the second data management system based on the second query statement, to obtain proprietary-format data in the second data management system.

In the method, a data management system, including a data warehouse, may provide a unified open access service, and provide an SDK to another data management system, including a big data engine. The SDK is integrated into the another data management system, so that the another data management system can convert a query statement by using the SDK, and access the unified open access service based on a query statement obtained through conversion, implementing sharing of proprietary-format data in the data management system with the outside. In this way, sharing proprietary-format data with the outside is supported, breaking a limitation that proprietary-format data is shared only within a data management system. In addition, a data sharing channel is established with the another data management system such as an external database, data warehouse, lakehouse, or a big data engine, improving usability of the data management system.

In some possible implementations, the second data management system may read, based on the second query statement, logical metadata by using a metadata interface in the unified open access service, and then read proprietary-format data in the second data management system based on the logical metadata.

Logical metadata is business metadata about a logical structure (for example, a table). Business metadata is data that describes concepts, relationships, and rules associated with a business domain in a data management system. Based on this, the second data management system can read, based on logical metadata, proprietary-format data to which the logical metadata points.

In this way, the limitation that proprietary-format data is shared only within a data management system is broken, and a data sharing channel is established between the data management systems, improving usability of the data management system.

In some possible implementations, when reading the logical metadata, the second data management system may create a transaction based on the second query statement, then obtain a latest timestamp of the transaction from global transaction management by using a transaction interface in the unified open access service, and then read metadata corresponding to the latest timestamp by using the metadata interface in the unified open access service.

In the method, a concept of transactions is introduced, and consistency of snapshot reads is guaranteed based on transactional semantics, implementing consistency during data access.

In some possible implementations, the second data management system may deserialize the second query statement, to obtain a to-be-executed operator; and then execute the operator, and create the transaction. The transaction can guarantee that results of executing the operator are either committed together or rolled back together, guaranteeing consistency of data.

In some possible implementations, the first query language is a structured query language, and the second query language is a lightweight markup language. The lightweight markup language may be a scripting language, for example, the JavaScript language.

In the method, query statements are converted by using the SDK, implementing queries across data management systems, and further implementing data sharing between different data management systems.

In some possible implementations, the first data management system presents a sharing operation interface to a user, where the sharing operation interface supports an operation of sharing data within a system, an operation of sharing open-format data with an external system, and an operation of accessing proprietary-format data by an external system; and when the operation of accessing proprietary-format data by an external system is triggered, the first data management system returns proprietary-format data in the first data management system.

In the method, the first data management system supports a plurality of sharing modes, meeting requirements of different services.

In some possible implementations, the proprietary-format data includes columnstore unit data. In this way, proprietary-format data such as columnstore unit data can be shared across engines, thoroughly establishing a data sharing channel and providing high usability.

In some possible implementations, the first data management system and the second data management system are different data management systems among a database, a data warehouse, a lakehouse or a big data engine, and an artificial intelligence development platform. For example, the first data management system may be a big data engine or an artificial intelligence development platform, and the second data management system may be a database, a data warehouse, or a lakehouse.

In the method, a data sharing channel between a database, a data warehouse, or a lakehouse, and a big data engine or an artificial intelligence development platform is established, implementing data sharing between a database, a data warehouse, or a lakehouse, and a big data engine or an artificial intelligence development platform, especially sharing of proprietary-format data.

In some possible implementations, the second data management system may access, in an abstract table format, the proprietary-format data based on the logical metadata. The abstract table format, an open format, and proprietary data each belong to a universal interface layer. The second data management system may perform format conversion by using an interface of the universal interface layer, implementing that proprietary-format data is accessed in the abstract table format.

In this way, proprietary-format data can be shared with the outside, breaking a limitation that proprietary-format data is shared only within a data management system. **In** addition, a data sharing channel is established with the another data management system such as an external database, data warehouse, lakehouse, or a big data engine, improving usability of the data management system.

According to a second aspect, this application provides a first data management system. The system includes:
a communication module, configured to receive a first query statement, where the first query statement is a query statement that is based on a first query language;
a conversion module, configured to: obtain, based on the first query statement, a second query statement by using a software development kit of a second data management system, where the second query statement is a query statement that is based on a second query language; and
an access module, configured to access a unified open access service of the second data management system based on the second query statement, to obtain proprietary-format data in the second data management system.

In some possible implementations, the first query language is a structured query language, and the second query language is a lightweight markup language.

In some possible implementations, the system further includes:
an interaction module, configured to present a sharing operation interface to a user, where the sharing operation interface supports an operation of sharing data within a system, an operation of sharing open-format data with an external system, and an operation of accessing proprietary-format data by an external system; and
the communication module is further configured to: when the operation of accessing proprietary-format data by an external system is triggered, return proprietary-format data in the first data management system.

In some possible implementations, the proprietary-format data includes columnstore unit data.

In some possible implementations, the first data management system and the second data management system are different data management systems among a database, a data warehouse, a lakehouse or a big data engine, and an artificial intelligence development platform.

According to a third aspect, this application provides a second data management system. The system includes:
a communication module, configured to receive a second query statement;
a metadata reading module, configured to: read, based on the second query statement, logical metadata by using a metadata interface in a unified open access service; and
a data reading module, configured to read proprietary-format data in the second data management system based on the logical metadata.

In some possible implementations, the metadata reading module is configured to:
create a transaction based on the second query statement;
obtain a latest timestamp of the transaction from global transaction management by using a transaction interface in the unified open access service; and
read metadata corresponding to the latest timestamp by using the metadata interface in the unified open access service.

In some possible implementations, the metadata reading module is specifically configured to:
deserialize the second query statement, to obtain a to-be-executed operator; and
execute the operator, and create the transaction.

In some possible implementations, the data reading module is specifically configured to:
access, in an abstract table format, the proprietary-format data based on the logical metadata.

According to a fourth aspect, this application provides a computer cluster. The computer cluster includes at least one computer, and the at least one computer includes at least one processor and at least one memory. The at least one processor and the at least one memory communicate with each other. The at least one processor is configured to execute instructions stored in the at least one memory, so that the computer or the computer cluster performs steps that are performed by the first data management system or the second data management system in the data sharing method according to any one of the first aspect or the implementations of the first aspect.

According to a fifth aspect, this application provides a computer-readable storage medium. The computer-readable storage medium stores instructions. The instructions instruct a computer or a computer cluster to perform the data sharing method according to any one of the first aspect or the implementations of the first aspect.

According to a sixth aspect, this application provides a computer program product including instructions. When the instructions are run on a computer or a computer cluster, the computer or the computer cluster is enabled to perform the data sharing method according to any one of the first aspect or the implementations of the first aspect.

In this application, combinations may be further made based on the implementations provided in the foregoing aspects, to provide more implementations.

### BRIEF DESCRIPTION OF DRAWINGS

To describe the technical methods in embodiments of this application more clearly, the following briefly describes accompanying drawings that need to be used in embodiments.
FIG. 1 is a diagram of an architecture of a data sharing system according to an embodiment of this application;

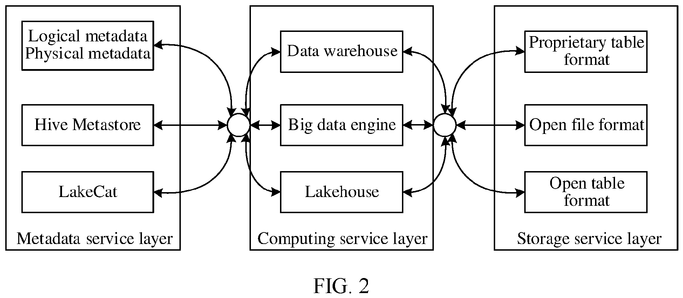

FIG. 2 is a logical diagram of a data sharing system according to an embodiment of this application;
FIG. 3 is a diagram of a layered structure of a data management system according to an embodiment of this application;
FIG. 4 is a flowchart of a data sharing method according to an embodiment of this application;
FIG. 5 is a diagram of execution routes of different data sharing methods according to an embodiment of this application;
FIG. 6 is a diagram of a structure of a second data management system according to an embodiment of this application;
FIG. 7 is a diagram of a structure of a computer cluster according to an embodiment of this application; and
FIG. 8 is a diagram of a structure of a computer cluster according to an embodiment of this application.

### DESCRIPTION OF EMBODIMENTS

Terms "first" and "second" in embodiments of this application are merely intended for a purpose of description, and shall not be understood as an indication or implication of relative importance or implicit indication of a quantity of indicated technical features. Therefore, a feature defined with "first" or "second" may explicitly or implicitly indicate that one or more such features are included.

First, some technical terms used in embodiments of this application are described.

A data warehouse (Data Warehouse, DWS) is a central repository of integrated data from one or more different data sources, configured to provide data query and analysis functions. A data warehouse, which may also be referred to as an enterprise data warehouse, is essentially a data management system configured for reporting and analyzing data, and is a core component of business intelligence (business).

A data warehouse designed based on cloud storage, such as public cloud storage technologies, is also referred to as a cloud native (cloud native) data warehouse. A cloud native data warehouse takes full advantage of cloud storage, supports multi-tenancy and multi-transaction, features high security and high scalability, and can be offered to users as a "pay-as-you-go" service.

A cloud native data warehouse such as Snowflake may implement multi-cluster data sharing. Specifically, a data provider (for example, a user A) may upload a data table into which data is written, to a data warehouse such as Snowflake on a cloud platform. The data warehouse may support data consumers (for example, a user B, a user C, and a user D) to perform management and queries by using familiar tools and interfaces. The data warehouse such as Snowflake may clone the data table, which is specifically copying metadata of the data table, with no need to create a copy of the data table. In this way, data is shared between the data provider and the plurality of data consumers (which may be data consumers belonging to different clusters).

However, although the foregoing method supports data sharing within a data warehouse, it is difficult for the method to implement data sharing across data warehouses. In particular, it is difficult for the method to support high-performance access to proprietary-format data in a data warehouse by an external engine (for example, a big data engine), resulting in low usability.

In view of this, an embodiment of this application provides a method for sharing data between different data management systems. For ease of description, the different data management systems are respectively denoted as a first data management system and a second data management system in this embodiment of this application. The first data management system and the second data management system may be different types of data management systems among a data warehouse, a database, or a lakehouse, or a big data engine or an artificial intelligence (artificial intelligence, AI) development platform.

Specifically, the first data management system (for example, a big data engine) receives a first query statement, where the first query statement is a query statement that is based on a first query language; the first data management system obtains, based on the first query statement, a second query statement by using a software development kit (software development toolkit, SDK) of the second data management system (for example, a data warehouse), where the second query statement is a query statement that is based on a second query language; and then the first data management system accesses a unified open access service (Unified Open Access Service, UOAS) of the second data management system based on the second query statement, to obtain proprietary-format data in the second data management system.

In the method, a data management system, including a data warehouse, may provide a unified open access service, and provide an SDK to another data management system, including a big data engine. The SDK is integrated into the another data management system, so that the another data management system can convert a query statement by using the SDK, and access the unified open access service based on a query statement obtained through conversion, implementing sharing of proprietary-format data in the data management system with the outside. In this way, sharing proprietary-format data with the outside is supported, breaking a limitation that proprietary-format data is shared only within a data management system. In addition, a data sharing channel is established with the another data management system such as an external database, data warehouse, lakehouse, or a big data engine, improving usability of the data management system.

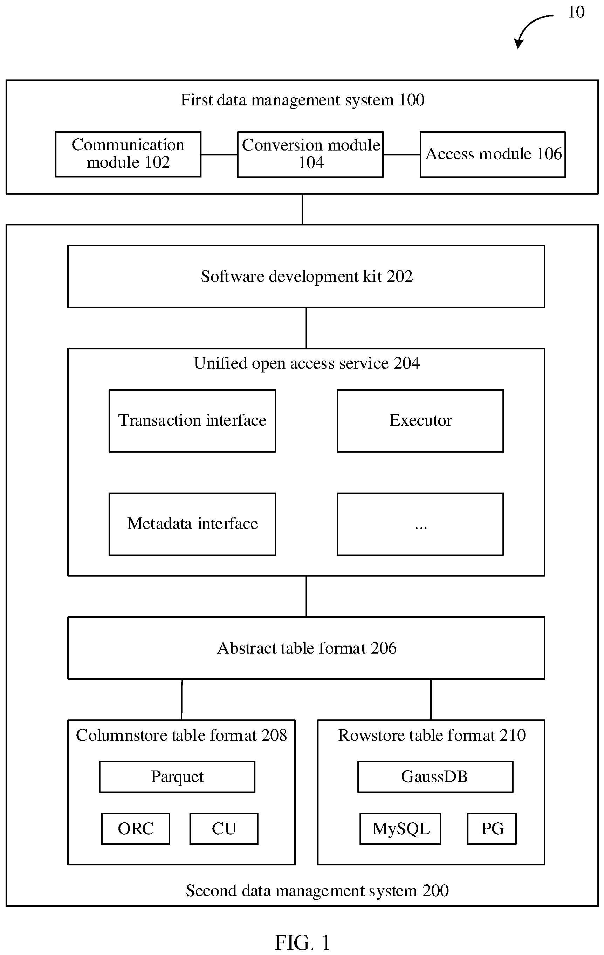

Refer to a diagram of an architecture of a data sharing system shown in FIG. 1. The data sharing system 10 includes at least one first data management system 100 and a second data management system 200. The at least one first data management system 100 is connected to the second data management system 200. The second data management system 200 may serve as a data provider, and the at least one first data management system 100 may serve as a data consumer. The first data management system 100 is configured to access proprietary-format data in the second data management system 200. The first data management system 100 may be a big data engine, for example, Spark, Flink, Presto, or an AI development platform. The second data management system 200 may be a database, a data warehouse, or a lakehouse.

The first data management system 100 includes a communication module 102, a conversion module 104, and an access module 106. The second data management system 200 includes a software development kit 202 and a unified open access service 204. When the second data management system 200 is a different type of data management system such as a database, a data warehouse, or a lakehouse, the software development kit 202 may be different. In an example in FIG. 1, the second data management system 200 may be a Gauss database (Gauss database,GaussDB), and the software development kit 202 may be an SDK of the GaussDB.

The communication module 102 is configured to receive a first query statement. The first query statement is a query statement that is based on a first query language. In this example, the first query language may be a structured query language (Structured Query Language, SQL). Accordingly, the first query statement may be an SQL statement. The first data management system 100 may provide at least one type of user interfaces, for example, one or more of a command line interface (command line interface, CLI), a Java database connectivity (Java Database Connectivity, JDBC) interface, or an open database connectivity (Open Database Connectivity, ODBC) interface. A user may enter a query command through the interface, with no need of additional code writing. Correspondingly, the communication module 102 receives the query command, to obtain a first query statement.

The conversion module 104 is configured to: obtain, based on the first query statement, a second query statement by using the software development kit 202 of the second data management system 200. The second query statement is a query statement that is based on a second query language. The second query language may be a lightweight language. The lightweight markup language may be a scripting language, for example, the JavaScript language. Specifically, the conversion module 104 may parse the first query statement and generate an execution plan, and then serialize the execution plan into the second query statement by using the software development kit 202 such as the SDK of the GaussDB.

The access module 106 is configured to access the unified open access service 204 based on the second query statement, to obtain proprietary-format data in the second data management system 200. Proprietary-format data is data whose storage format is not publicly available, for example, columnstore unit (column unit, CU) data. Data that is the opposite of proprietary-format data is open-format data. Open-format data is data whose storage format is publicly available, including but not limited to optimized row columnar (Optimized Row Columnar, ORC) data, comma-separated values (Comma-separated values, CSV) data, and Parquet data. The access module 106 may also access open-format data in the second data management system 200.

In some possible implementations, the second data management system 200 further supports an abstract table format (abstract table format). The access module 106 in the first data management system 100 may access, in the abstract table format, proprietary-format data based on logical metadata of the proprietary-format data. An example of the proprietary-format data is columnstore unit data in a columnstore table format (column table format). Further, the access module 106 in the first data management system 100 may access, in the abstract table format, open-format data based on logical metadata of the open-format data. An example of the open-format data is Parquet data or ORC data in the columnstore table format, or MySQL data, GaussDB data, or PostgreSQL data (that is, PG data) in a rowstore table format (row table format).

The data sharing system 10 may be divided into three layers from a macro perspective, specifically including a storage service layer, a computing service layer, and a metadata service layer. The storage service layer may be a unified SQL storage service layer. The storage service layer may include a file system that is connected to the first data management system 100 and the second data management system 200 and that is configured to provide storage services, for example, object storage (object storage, OBS), the Hadoop distributed file system (Hadoop Distributed File System, HDFS), or a local file system. The storage services support reading and writing open formats, for example, file formats such as CSV, ORC, or Parquet, or table formats such as lakehouses Delta lake and Hudi. The storage services further support reading and writing proprietary formats, for example, the CU. The computing service layer may be a unified SQL computing service layer. The computing service layer may include the first data management system 100 and the second data management system 200, for example, include a data warehouse, a big data engine, and a lakehouse (delta lake). The metadata service layer may include metadata services for different data management systems, for example, Hive Metastore (Hive Metastore) for big data engines, metadata management (denoted as LakeCat) for lakehouses, and metadata management for data warehouses. The metadata management for data warehouses includes storage of logical metadata (logical meta) and storage of physical metadata (physical meta).

The computing service layer provides an interface, for example, an SQL interface. The computing service layer may interact with the storage service layer and the metadata service layer through the SQL interface. In this embodiment, the computing service layer is an entrance for user access. A user can trigger, through the entrance, data sharing between different data management systems at the computing service layer, such as a data warehouse and a big data engine. For example, the data warehouse shares proprietary-format data in the data warehouse with the big data engine.

The following describes an architecture of a data management system by using a data warehouse as an example.

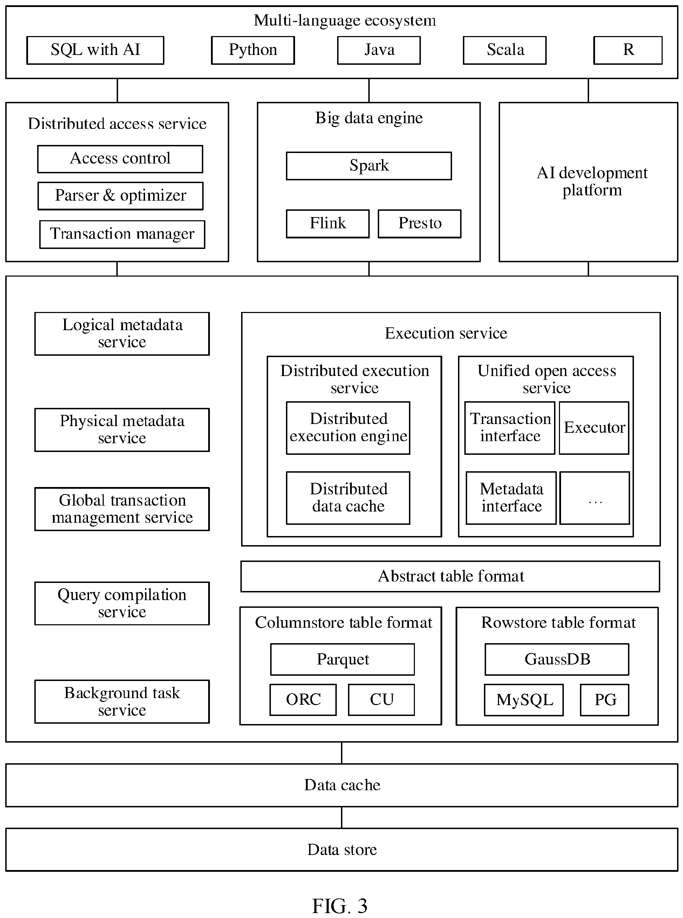

Refer to a diagram of an architecture of a data warehouse shown in FIG. 3. The data warehouse may be decoupled into service layers. For example, the data warehouse may be divided into an SQL access service, a logical metadata service (logic metadata service), and a physical metadata service (physical metadata service). The SQL access service may be a distributed SQL service, specifically including one or more of access control (access control), syntax analysis and optimization (parser & optimizer), and a transaction manager (transaction manager). Further, the data warehouse may further include a query compilation service (query compilation) and a background task service (background task service). The background task service may include vacuuming for index or space reclamation.

The data warehouse further includes an execution service (Execution service). The execution service may include a distributed execution service (distributed execution service) and a unified open access service UOAS. The distributed execution service includes a distributed execution engine (distributed execution engine) and a distributed data cache (distributed data cache). The unified open access service includes a metadata application programming interface (application programming interface, API). The metadata application programming interface may be referred to as a metadata interface for short. Further, the unified open access service further includes an executor (executor) and a transaction interface (for example, a transaction API).

In some possible implementations, the data warehouse further includes a data cache and a data store. The data cache may be a distributed general-purpose cache. The general-purpose cache may support SQL semantics. The data store may implement shared, consistent storage. Specifically, the data store supports global unification of status data, strict transaction isolation and snapshot consistency, and transactions across rowstore tables and columnstore tables, guaranteeing global transaction consistency. In addition, the data store may further support elastic scaling.

Further, the data warehouse further includes a universal interface layer. The universal interface layer supports processing of an open format or a proprietary format in an abstract table format, to implement data sharing. The universal interface layer further supports providing of logical metadata. The universal interface layer also supports masking of an execution engine.

It should be noted that the data warehouse shown in FIG. 3 may be connected to an AI development platform or a big data engine, with the big data engine including spark, flink, presto, or the like, and supports a multi-language ecosystem, for example, may support Python, Java, Scala, R, or SQL with AI, featuring high usability.

The foregoing describes the architecture of the data sharing system 10 and an architecture of a data management system. The following describes the data sharing method in embodiments of this application with reference to the accompanying drawings.

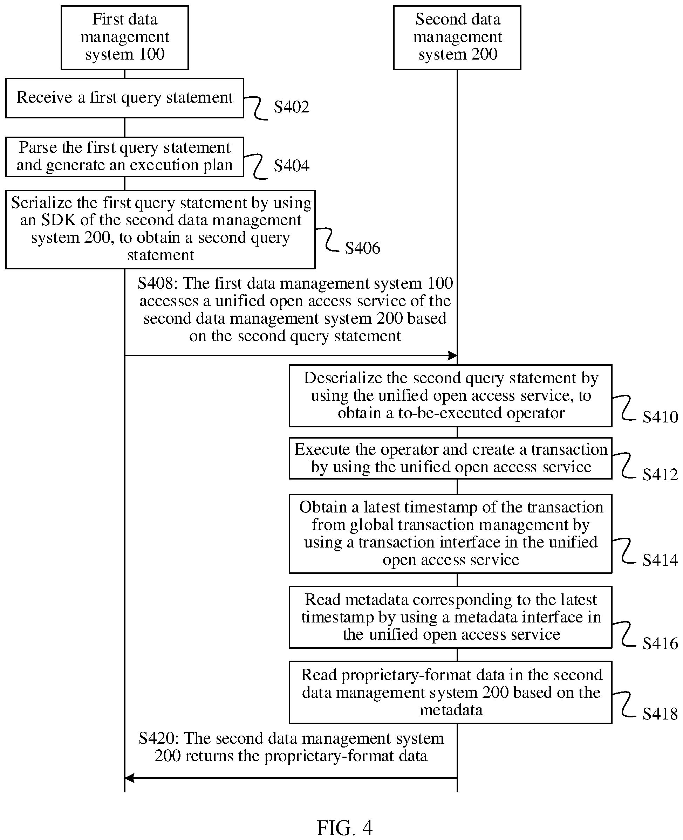

Refer to a flowchart of a data sharing method shown in FIG. 4. The method includes the following steps.

S402: A first data management system 100 receives a first query statement.

The first query statement is a statement that is based on a first query language. The first query language may be SQL. Based on this, the first query statement may be an SQL statement. It should be noted that the first query language may alternatively be another query language supported by the first data management system 100, for example, a data query language (data query language) or a contextual query language (contextual query language).

The first data management system 100 may provide a variety of user interfaces, and receive, through the user interface, the first query statement entered by a user. In some embodiments, the user interface may include one or more of a command line interface CLI, a JDBC interface, or an ODBC interface. A user may enter a query command through the user interface, with no need of additional code writing. Correspondingly, the first data management system 100 receives the query command, to obtain a first query statement.

S404: The first data management system 100 parses the first query statement and generates an execution plan.

The first data management system 100 may parse the first query statement by using a parser, for example, perform syntax analysis, to obtain a syntax tree of the first query statement, and then generate the execution plan based on the syntax tree. For ease of understanding, the following uses an example for description in which the first query statement is an SQL statement.

The first data management system 100 provides an SQL access service. When receiving an SQL statement, the first data management system 100 performs syntax analysis by using a parser (parser) in the SQL access service, to obtain an abstract syntax tree (Abstract Syntax Tree, AST). The abstract syntax tree may be referred to as a syntax tree for short. Then, the first data management system 100 analyzes the syntax tree by using an analyzer (analyzer), and then optimizes the analyzed syntax tree by using an optimizer (Optimizer), to convert the analyzed syntax tree into an optimized syntax tree (Optimized AST). Finally, the first data management system 100 segments the optimized syntax tree logically into a logical execution plan that can be used for distributed analytics.

Usually, a logical execution plan cannot be directly executed in an execution engine. Therefore, for different execution engines (presto, spark, mr, tez, or the like), the first data management system 100 may further generate corresponding physical execution plans, so that the execution engines execute the physical execution plans. The execution engine mr is used as an example. It is assumed that the logical execution plan includes aggregation, indicating that same IDs are to be aggregated. The first data management system 100 may convert the logical execution plan into a physical execution plan by using a hash shuffle method.

S406: The first data management system 100 serializes the first query statement by using an SDK of a second data management system 200, to obtain a second query statement.

The second query statement is a statement that is based on a second query language. The second query language may be a lightweight language. For example, the second query language may be a scripting language. The scripting language includes JavaScript, Ruby, Python, or PHP.

Serialization (serialization) is a process of converting a data structure or a state of an object into a byte sequence in an accessible format (for example, saved as a file, stored in a buffer, or sent over a network), so that an original state can later be restored in a same or another computer environment. The byte sequence includes data of the object, information about a type of the object, and a type of data stored in the object. A reverse operation of extracting a data structure or a state of an object from a byte sequence is referred to as deserialization (deserializer). Specifically, an object can be created in a memory based on data of an object, information about a type of the object, and a type of data stored in the object in a byte sequence. The created object is a copy that has the same semantics as the original object.

The SDK of the second data management system 200 provides a class with a serialization function. The class can be called by the first data management system 100 via a serialization API. Specifically, the first data management system 100 may call the serialization API in the SDK of the second data management system 200, and serialize the first query statement by using the class with the serialization function, to obtain the second query statement.

S404 and S406 are a specific implementation in which the first data management system 100 obtains, based on the first query statement, the second query statement by using the software development kit of the second data management system 200. In another possible implementation in this embodiment of this application, the first data management system 100 may alternatively convert a query statement in another manner.

S408: The first data management system 100 accesses a unified open access service of the second data management system 200 based on the second query statement.

Specifically, the second data management system 100 may commit the second query statement to the second data management system 200, to access the unified open access service UOAS of the second data management system 200.

S410: The second data management system 200 deserializes the second query statement by using the unified open access service, to obtain a to-be-executed operator.

The unified open access service UOAS includes an executor (executor). The second data management system 200 may execute the second query statement by using the executor in the UOAS, to deserialize the second query statement. Deserialization of the second query statement includes reconstructing an object in a memory based on data of an object, information about a type of the object, and a type of data stored in the object in the second query statement. The object may be an operator. To be specific, the second data management system 200 deserializes the second query statement by using the UOAS, to obtain a to-be-executed operator. The to-be-executed operator may include scanning (scan), filtering (filter), or the like. This is not limited in this embodiment.

S412: The second data management system 200 executes the operator and creates a transaction by using the unified open access service.

The second data management system 200 executes the operator, thus performing a query operation. Because there are a plurality of to-be-executed operators, to guarantee consistency between query results, the second data management system 200 may further create a transaction, for example, a global transaction. Then, consistency between query results is guaranteed by the transaction.

S414: The second data management system 200 obtains a latest timestamp of the transaction from global transaction management by using a transaction interface in the unified open access service.

Specifically, the unified open access service UOAS provides a transaction interface, which is specifically a transaction API. The second data management system 200 may obtain the latest timestamp of the transaction from the global transaction management (global transaction management, GTM) by using the transaction API.

S416: The second data management system 200 reads metadata corresponding to the latest timestamp by using a metadata interface in the unified open access service.

The unified open access service UOAS provides a metadata interface. The metadata interface may be a metadata API. The metadata API is used to read metadata. A metadata API in the second data management system 200 is used to read business metadata in the second data management system 200.

Business metadata is data that describes concepts, relationships, and rules associated with a business domain in a data management system. Business metadata may include one or more of a business term, an information classification, metrics, or a statistical caliber. For example, the second data management system 200 manages basic airport information data. Identification information, data quality and precision information, spatial reference information, release and update information, and responsible unit and contact information each constitute business metadata that describes the basic airport information data.

Business metadata may also be classified into logical metadata and physical metadata. Business metadata about a logical structure (for example, a table) is considered logical metadata. Logical metadata may be used for data classification and standardized extract-transform-load (Extract-transform-load, ETL) processing. An owner of a table may provide audit information about the table in business metadata. Further, the owner of the table may further provide default column values used to be written into the table and validation rules. Metadata about actual data stored in a table or partition is considered physical metadata. When an ETL processing job is completed, metrics about actual data may be stored for later validation. Same metrics may be used for analyzing costs or space of data.

Two tables may point to a same location. For example, in Hive, two tables may point to a same location. Therefore, it is quite important to distinguish between logical metadata and physical metadata. This is because two tables may have same physical metadata but different logical metadata.

Based on this, the second data management system 200 may read logical metadata and physical metadata by using the metadata API in the unified open access service. To guarantee consistency, the second data management system 200 may read logical metadata and physical metadata corresponding to the latest timestamp by using the metadata API in the unified open access service.

S418: The second data management system 200 reads proprietary-format data in the second data management system 200 based on the metadata.

Logical metadata describes a logical structure, for example, a table, and physical metadata describes actual data. Therefore, the second data management system 200 may read proprietary-format data in the second data management system 200, for example, CU data, based on the logical metadata and the physical metadata.

S420: The second data management system 200 returns the proprietary-format data by using the unified open access service.

S408 to S420 are a specific implementation in which the first data management system 100 accesses the unified open access service of the second data management system based on the second query statement, to obtain proprietary-format data in the second data management system. In another possible implementation in this embodiment of this application, the first data management system 100 may alternatively access proprietary-format data in the second data management system 200 in another manner. For example, the second data management system 100 may alternatively not create a transaction. Instead, after executing the operator, the second data management system 200 reads the metadata directly by using the metadata API in the unified open access service, reads the proprietary-format data based on the metadata, and then returns the proprietary-format data to the first data management system 200.

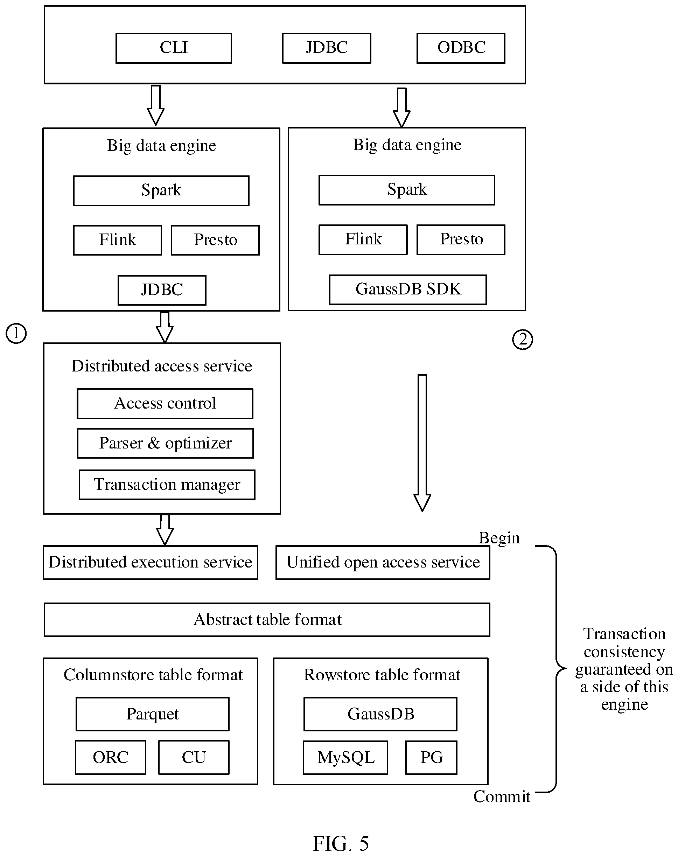

FIG. 5 further provides a diagram of execution routes of different data sharing methods. A conventional execution route is as follows: A big data engine sends an SQL statement through a JDBC interface, and then the SQL statement arrives at an entrance to a GaussDB. Specifically, a distributed SQL service (distributed SQL service) generates an execution plan by using a parser and an optimizer in the distributed SQL service. Then, an executor in a distributed execution service (distributed execution service) executes the execution plan. In this way, a columnstore table format or a rowstore table format is accessed in an abstract table format. An execution route in this embodiment of this application is as follows: A big data engine sends an SQL statement, and the SQL statement arrives at an SDK of a GaussDB. The SDK of the GaussDB converts the SQL statement into a second query statement that is in a lightweight language. A unified open access service UOAS of the GaussDB accesses, in an abstract table format, proprietary-format data such as a CU in the GaussDB based on the second query statement.

Based on the foregoing content descriptions, an embodiment of this application provides a method that is used for sharing data between data management systems and that supports transactional semantics. In the method, proprietary-format data (including but not limited to files or table data) in a data management system (for example, a data warehouse) is shared with another data management system (for example, an external data warehouse or a big data engine) in a form of releasing an SDK to the public, breaking a limitation that proprietary-format data is shared only within a system, establishing a data sharing channel that is across systems (for example, across engines or across data warehouses), and improving usability of the data management system. Further, in the method, consistent snapshot reads can also be guaranteed based on transactional semantics, guaranteeing that query results obtained at a same time are the same and that query results are highly reliable.

In the embodiment shown in FIG. 4, the following is mainly described: The second data management system 200 shares proprietary-format data with the first data management system 100. In some possible implementations, the second data management system 200 may also share open-format data with the first data management system 100, or data is shared within the second data management system 100.

Similar to the second data management system 200, the first data management system 100 also supports a plurality of sharing modes, such as an internal sharing mode, a mode of sharing open-format data between systems, and a mode of sharing proprietary-format data between systems. The first data management system 100 may present a sharing operation interface to a user. The sharing operation interface supports an operation of sharing data within a system, an operation of sharing open-format data with an external system, and an operation of accessing proprietary-format data by an external system. The external system may be the second data management system 200.

When the operation of accessing proprietary-format data by an external system is triggered, the first data management system 100 may return proprietary-format data in the first data management system 100. When the operation of sharing data within a system is triggered, the first data management system 100 may share proprietary-format data or open-format data within the system. When the operation of sharing open-format data with an external system is triggered, the first data management system 100 may return open-format data.

For a specific implementation of sharing proprietary-format data by the first data management system, refer to descriptions of related content in the embodiment shown in FIG. 4. The following describes sharing data within a system and sharing open-format data between systems.

Sharing data within a system may be implemented in a plurality of manners, which are described below separately.

In a first manner, proprietary data is shared based on metadata. In the manner, sharing may be further divided into two categories according to a sharing granularity. One category is coarse-grained sharing, which is typically a CU-level change. In this case, a full update mechanism is used, and copy-on-write (copy-on-write table) is performed. In other words, when data is shared within a system, metadata is copied, but physical data is not copied. CU data is fully copied only when data is written. The other category is fine-grained sharing, which is typically a tuple (tuple)-level change. In this case, an incremental update is used, and merge-on-read (merge-on-read) is performed. Usually, a delta table (delta table) needs to be shared. The delta table includes delta records. When to-be-shared data is read within a system, a delta table is copied, and merging delta records is triggered.

In a second manner, sharing is performed in a proprietary table data format across tenants. Usually, the sharing is implemented through granting and sharing as aliases. A granting technique (for example, grant select) can isolate permissions of a plurality of tenants and users on shared data from one another. Aliases (for example, share as synonyms) are used for naming, on a global basis, shared data that is at a unified level (for example, a database level or a table level), to facilitating a case in which the data is shared a plurality of times within a system.

Sharing open-format data between systems may be implemented by creating a foreign manner or through access based on logical metadata. The two cases are described below separately.

In a first case, a data management system such as a GaussDB or a data warehouse DWS may create a foreign table in the following manner, to share open-format data: CREATE FOREIGN TABLE posts(...) SERVER x OPTIONS(FORMAT 'ORC' FOLDERNAME 'a-path') ...

In a second case, a data management system may perform access based on logical metadata, such as Hive Metastore (HMS for short) or self-contained metadata in an open format, to share open-format data. The data management system can implement different levels of data sharing based on logical metadata.

Specifically, the data management system can access catalog.schema.table by using the following statement: SELECT * FROM hr.emp, hms.sns.posts; can access schema.table by using the following statement: SELECT * FROM hr.emp, hms.posts; and can access a file or object path by using the following statement: SELECT * FROM parquet.'s3a://sns/posts.parquet'.

For the implementation of accessing open-format data based on logical metadata, the following uses an example for description in which a data warehouse accesses an open-source data table format across an engine. The engine in the example may be Spark. The method specifically includes the following steps.

S1: An optimizer in a computing service is connected to a metadata service.

Specifically, the metadata service includes Hive Metastore or metadata in OBS. For a system in which storage and computing are separated (serverless), a compute node (compute node, CN) providing a computing service directly reads metadata in Hive Metastore during compilation, reads a file list in the OBS, and then packages the metadata (including the file list in the OBS) in an execution plan (plan).

The HMS includes logical metadata. The logical metadata may be read before the execution plan is generated.

S2: The computing service performs commitment (commit) control on a job.

Specifically, before execution starts, the compute node creates a temporary output directory, and after the execution is complete, the compute node modifies the output directory into Hive Metastore by using loadPartition/loadTable. It should be noted that because a query in a data warehouse is not retried, a query result can be directly written to a temporary output directory, and the entire directory can be deleted directly if a job fails. Therefore, an intermediate execution process may not be executed strictly in accordance with logic of FileOutputCommitter.

Based on the data sharing method provided in embodiments of this application, embodiments of this application further provide a first data management system 100 and a second data management system 200 as described above. With reference to the accompanying drawings, the following describes the first data management system 100 and the second data management system 200 provided in the embodiments of this application.

First, refer to a diagram of a structure of a first data management system 100 shown in FIG. 1. The system 100 includes:
a communication module 102, configured to receive a first query statement, where the first query statement is a query statement that is based on a first query language;
a conversion module 104, configured to: obtain, based on the first query statement, a second query statement by using a software development kit of a second data management system 200, where the second query statement is a query statement that is based on a second query language; and
an access module 106, configured to access a unified open access service of the second data management system 200 based on the second query statement, to obtain proprietary-format data in the second data management system 200.

In some possible implementations, the first query language is a structured query language, and the second query language is a lightweight markup language.

In some possible implementations, the system 100 further includes:
an interaction module, configured to present a sharing operation interface to a user, where the sharing operation interface supports an operation of sharing data within a system, an operation of sharing open-format data with an external system, and an operation of accessing proprietary-format data by an external system; and
the communication module 102 is further configured to: when the operation of accessing proprietary-format data by an external system is triggered, return proprietary-format data in the first data management system 100.

In some possible implementations, the proprietary-format data includes columnstore unit data.

In some possible implementations, the first data management system 100 and the second data management system 200 are different data management systems among a database, a data warehouse, a lakehouse or a big data engine, and an artificial intelligence development platform.

The first data management system 100 according to this embodiment of this application may correspondingly perform the method described in embodiments of this application. In addition, the foregoing and other operations and/or functions of the modules/units in the first data management system 100 are respectively intended to implement corresponding procedures in the method in the embodiment shown in FIG. 4. For brevity, details are not described herein again.

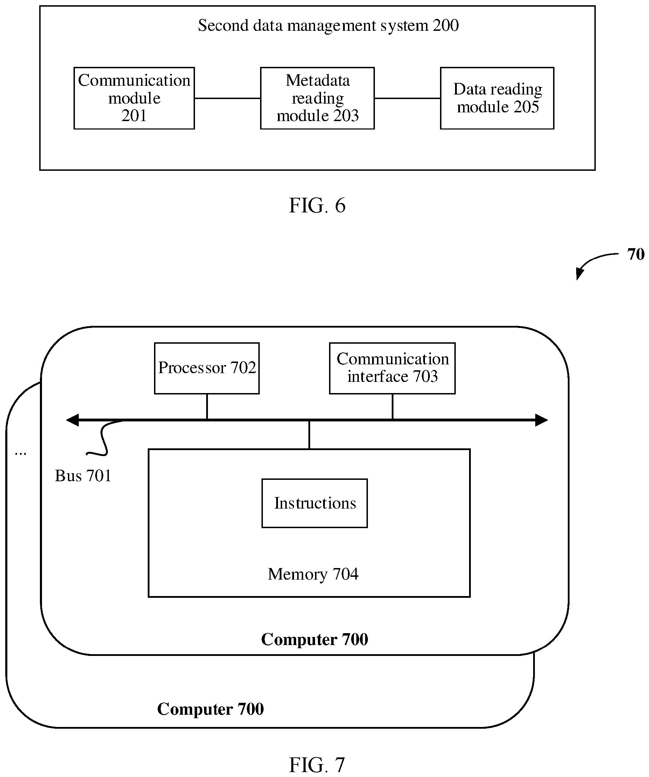

Next, refer to a diagram of a structure of a second data management system 200 shown in FIG. 6. The system 200 includes:
a communication module 201, configured to receive a second query statement;
a metadata reading module 203, configured to: read, based on the second query statement, logical metadata by using a metadata interface in a unified open access service; and
a data reading module 205, configured to read proprietary-format data in the second data management system based on the logical metadata.

In some possible implementations, the metadata reading module 203 is configured to:
create a transaction based on the second query statement;
obtain a latest timestamp of the transaction from global transaction management by using a transaction interface in the unified open access service; and
read metadata corresponding to the latest timestamp by using the metadata interface in the unified open access service.

In some possible implementations, the metadata reading module 203 is specifically configured to:
deserialize the second query statement, to obtain a to-be-executed operator; and
execute the operator, and create the transaction.

In some possible implementations, the data reading module 205 is specifically configured to:
access, in an abstract table format, the proprietary-format data based on the logical metadata.

It should be noted that the modules in the second data management system 200 in the embodiment shown in FIG. 6 are not shown in FIG. 1. In FIG. 1 and FIG. 6, the second data management system 200 is divided into modules from different dimensions, and this does not constitute a limitation on embodiments of this application.

The second data management system 200 according to this embodiment of this application may correspondingly perform the method described in embodiments of this application. In addition, the foregoing and other operations and/or functions of the modules/units in the second data management system 200 are respectively intended to implement corresponding procedures in the method in the embodiment shown in FIG. 4. For brevity, details are not described herein again.

An embodiment of this application further provides a computer cluster. The computer cluster includes at least one computer. Any one of the at least one computer may be from a cloud environment or an edge environment, or may be a terminal device. The computer cluster is specifically configured to implement functions of the first data management system 100 in the embodiment shown in FIG. 1.

FIG. 7 provides a diagram of a structure of a computer cluster. As shown in FIG. 7, the computer cluster 70 includes a plurality of computers 700. The computer 700 includes a bus 701, a processor 702, a communication interface 703, and a memory 704. The processor 702, the memory 704, and the communication interface 703 communicate with each other through the bus 701.

The bus 701 may be a peripheral component interconnect (peripheral component interconnect, PCI) bus, an extended industry standard architecture (extended industry standard architecture, EISA) bus, or the like. Buses may be classified into address buses, data buses, control buses, and the like. For ease of representation, only one thick line is used for representation in FIG. 7, but it does not mean that there is only one bus or only one type of bus.

The processor 702 may be any one or more of processors such as a central processing unit (central processing unit, CPU), a graphics processing unit (graphics processing unit, GPU), a micro processor (micro processor, MP), or a digital signal processor (digital signal processor, DSP).

The communication interface 703 is configured to communicate with the outside. For example, the communication interface 703 is configured to receive a first query statement, send a second query statement to a second data management system 200, or the like.

The memory 704 may include a volatile memory (volatile memory), for example, a random access memory (random access memory, RAM). The memory 704 may further include a non-volatile memory (non-volatile memory), for example, a read-only memory (read-only memory, ROM), a flash memory, a hard disk drive (hard disk drive, HDD), or a solid state drive (solid state drive, SSD).

The memory 704 stores computer-readable instructions. The processor 702 executes the computer-readable instructions, so that the computer cluster 70 performs steps that are performed by the first data management system 100 in the data sharing method (or implements functions of the first data management system 100).

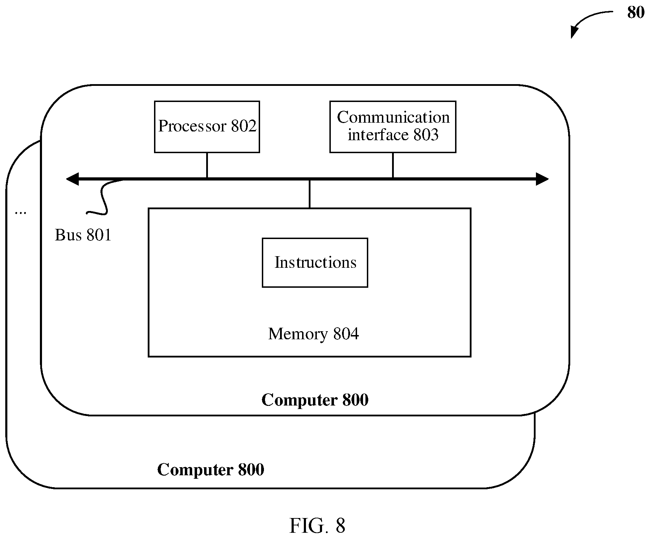

Specifically, when the embodiment of the first data management system 100 shown in FIG. 1 is implemented, and when functions of the modules of the first data management system 100 such as the communication module 102, the conversion module 104, and the access module 106 described in FIG. 1 are implemented by software, software or program code required to perform the functions of the modules in FIG. 8 may be stored in the at least one memory 704 in the computer cluster 70. The at least one processor 702 executes the program code stored in the memory 704, so that the computer cluster 70 performs the data sharing method.

An embodiment of this application further provides another computer cluster. The computer cluster includes at least one computer. Any one of the at least one computer may be from a cloud environment or an edge environment, or may be a terminal device. The computer cluster is specifically configured to implement functions of the second data management system 200 in the embodiment shown in FIG. 6.

FIG. 8 provides a diagram of a structure of a computer cluster. As shown in FIG. 8, the computer cluster 80 includes a plurality of computers 800. The computer 800 includes a bus 801, a processor 802, a communication interface 803, and a memory 804. The processor 802, the memory 804, and the communication interface 803 communicate with each other through the bus 801.

For related implementations of the bus 801, the processor 802, the communication interface 803, and the memory 804, refer to descriptions of related content in the embodiment shown in FIG. 7. Details are not described herein again.

The memory 804 stores computer-readable instructions. The processor 802 executes the computer-readable instructions, so that the computer cluster 80 performs steps that are performed by the second data management system 200 in the data sharing method (or implements functions of the second data management system 200).

Specifically, when the embodiment of the second data management system 200 shown in FIG. 6 is implemented, and when functions of the modules of the second data management system 200 such as the communication module 201, the metadata reading module 203, and the data reading module 205 described in FIG. 6 are implemented by software, software or program code required to perform the functions of the modules in FIG. 8 may be stored in the at least one memory 804 in the computer cluster 80. The at least one processor 802 executes the program code stored in the memory 804, so that the computer cluster 80 performs the data sharing method.

An embodiment of this application further provides a computer-readable storage medium. The computer-readable storage medium may be any usable medium accessible by a computer, or a data storage device such as a data center including one or more usable media. The usable medium may be a magnetic medium (for example, a floppy disk, a hard disk, or a magnetic tape), an optical medium (for example, a DVD), a semiconductor medium (for example, a solid state drive), or the like. The computer-readable storage medium includes instructions. The instructions instruct a computer or a computer cluster to perform the data sharing method.

An embodiment of this application further provides a computer program product. The computer program product includes one or more computer instructions. When the computer instructions are loaded and executed on a computer, all or some of the procedures or functions according to embodiments of this application are generated. The computer instructions may be stored in a computer-readable storage medium or may be transmitted from one computer-readable storage medium to another. For example, the computer instructions may be transmitted from a website, computer, or data center to another website, computer, or data center in a wired (for example, a coaxial cable, an optical fiber, or a digital subscriber line (DSL)) or wireless (for example, infrared, radio, or microwave) manner. The computer program product may be a software installation package. When any one of the data sharing methods needs to be used, the computer program product may be downloaded, and executed on a computer or a computer cluster.

Descriptions of procedures or structures corresponding to the accompanying drawings have their respective focuses. For a part that is not described in detail in a procedure or structure, refer to related descriptions of other procedures or structures.

## Claims

1. A data sharing method, wherein the method comprises:
receiving, by a first data management system, a first query statement, wherein the first query statement is a query statement that is based on a first query language;
obtaining, by the first data management system based on the first query statement, a second query statement by using a software development kit of a second data management system, wherein the second query statement is a query statement that is based on a second query language; and
accessing, by the first data management system, a unified open access service of the second data management system based on the second query statement, to obtain proprietary-format data in the second data management system.

2. The method according to claim 1, wherein the method further comprises:
reading, by the second data management system based on the second query statement, logical metadata by using a metadata interface in the unified open access service; and
reading, by the second data management system, proprietary-format data in the second data management system based on the logical metadata.

3. The method according to claim 2, wherein the reading, by the second data management system based on the second query statement, logical metadata by using a metadata interface in the unified open access service comprises:
creating, by the second data management system, a transaction based on the second query statement;
obtaining, by the second data management system, a latest timestamp of the transaction from global transaction management by using a transaction interface in the unified open access service; and
reading, by the second data management system, metadata corresponding to the latest timestamp by using the metadata interface in the unified open access service.

4. The method according to claim 2, wherein the creating, by the second data management system, a transaction based on the second query statement comprises:
deserializing, by the second data management system, the second query statement, to obtain a to-be-executed operator; and
executing, by the second data management system, the operator, and creating the transaction.

5. The method according to any one of claims 1 to 4, wherein the first query language is a structured query language, and the second query language is a lightweight markup language.

6. The method according to any one of claims 1 to 5, wherein the method further comprises:
presenting, by the first data management system, a sharing operation interface to a user, wherein the sharing operation interface supports an operation of sharing data within a system, an operation of sharing open-format data with an external system, and an operation of accessing proprietary-format data by an external system; and
when the operation of accessing proprietary-format data by an external system is triggered, returning, by the first data management system, proprietary-format data in the first data management system.

7. The method according to any one of claims 1 to 6, wherein the proprietary-format data comprises columnstore unit data.

8. The method according to any one of claims 1 to 7, wherein the first data management system and the second data management system are different data management systems among a database, a data warehouse, a lakehouse or a big data engine, and an artificial intelligence development platform.

9. The method according to any one of claims 2 to 4, wherein the reading, by the second data management system, proprietary-format data in the second data management system based on the logical metadata comprises:
accessing, by the second data management system in an abstract table format, the proprietary-format data based on the logical metadata.

10. A first data management system, wherein the system comprises:
a communication module, configured to receive a first query statement, wherein the first query statement is a query statement that is based on a first query language;
a conversion module, configured to: obtain, based on the first query statement, a second query statement by using a software development kit of a second data management system, wherein the second query statement is a query statement that is based on a second query language; and
an access module, configured to access a unified open access service of the second data management system based on the second query statement, to obtain proprietary-format data in the second data management system.

11. The system according to claim 10, wherein the first query language is a structured query language, and the second query language is a lightweight markup language.

12. The system according to claim 10 or 11, wherein the system further comprises:
an interaction module, configured to present a sharing operation interface to a user, wherein the sharing operation interface supports an operation of sharing data within a system, an operation of sharing open-format data with an external system, and an operation of accessing proprietary-format data by an external system; and
the communication module is further configured to: when the operation of accessing proprietary-format data by an external system is triggered, return proprietary-format data in the first data management system.

13. The system according to any one of claims 10 to 12, wherein the proprietary-format data comprises columnstore unit data.

14. The method according to any one of claims 10 to 13, wherein the first data management system and the second data management system are different data management systems among a database, a data warehouse, a lakehouse or a big data engine, and an artificial intelligence development platform.

15. A second data management system, wherein the system comprises:
a communication module, configured to receive a second query statement;
a metadata reading module, configured to: read, based on the second query statement, logical metadata by using a metadata interface in a unified open access service; and
a data reading module, configured to read proprietary-format data in the second data management system based on the logical metadata.

16. The system according to claim 15, wherein the metadata reading module is configured to:
create a transaction based on the second query statement;
obtain a latest timestamp of the transaction from global transaction management by using a transaction interface in the unified open access service; and
read metadata corresponding to the latest timestamp by using the metadata interface in the unified open access service.

17. The method according to claim 16, wherein the metadata reading module is specifically configured to:
deserialize the second query statement, to obtain a to-be-executed operator; and
execute the operator, and create the transaction.

18. The method according to any one of claims 15 to 17, wherein the data reading module is specifically configured to:
access, in an abstract table format, the proprietary-format data based on the logical metadata.

19. A computer cluster, wherein the computer cluster comprises at least one computer, the at least one computer comprises at least one processor and at least one memory, the at least one memory stores computer-readable instructions, and the at least one processor executes the computer-readable instructions, so that the computer cluster performs steps that are performed by the first data management system or the second data management system in the method according to any one of claims 1 to 9.

20. A computer-readable storage medium, comprising computer-readable instructions, wherein the computer-readable instructions are used for implementing the method according to any one of claims 1 to 9.

21. A computer program product, comprising computer-readable instructions, wherein the computer-readable instructions are used for implementing the method according to any one of claims 1 to 9.
